# EUROPEAN PATENT SPECIFICATION

(11) **EP 3 200 420 B1**
(45) Date of publication and mention of the grant of the patent: **03.03.2021**
(21) Application number: 16153354.2
(22) Date of filing: 29.01.2016
(51) Int. Cl.: H04L 29/06, H04W 12/02, G06Q 30/04, H04W 76/10, H04W 12/06

(54) **PROVIDING COMMUNICATIONS SECURITY TO AN END-TO-END COMMUNICATION CONNECTION**
PROVIDING COMMUNICATIONS SECURITY TO AN END-TO-END COMMUNICATION CONNECTION
PROVIDING COMMUNICATIONS SECURITY TO AN END-TO-END COMMUNICATION CONNECTION

(43) Date of publication of application: 02.08.2017
(73) Proprietor: Vodafone GmbH, 40549 Düsseldorf (DE)
(72) Inventor: BÖNING, Andreas, 42699 Solingen (DE); KORRECK, Jochen, 46539 Dinslaken (DE)
(74) Representative: Weisbrodt, Bernd

(56) References cited:
- US-A1- 2006 090 074
- US-A1- 2013 081 132
- US-A1- 2016 255 076

## Description

The invention relates to a network device for providing communications security, like privacy and confidentiality, to an end-to-end communication connection. The invention further relates to a method for providing communications security, like privacy and confidentiality, to an end-to-end communication connection.

Using electronic devices for communicating over a communication network, such as the internet, where a user device is accessing the communication network via connections provided by unknown parties or public services, communications security is a major concern. Communications security prevents unauthorized interceptors from accessing communications in an intelligible form, while still delivering content to the intended recipients. One possibility to provide communications security is to use crypto-security, i.e. to encrypt the transmitted data to provide privacy and confidentiality.

Privacy according to the present invention refers especially to the anonymity of transmitted data or the control of data published via a communication network. Confidentiality according to the present invention refers to the secrecy of the transmitted data.

The data transmitted over a communication network can be intelligibly investigated by any person having access to a network element involved in the data transmission unless the transmitted data is encrypted. Thus, an encryption of the transmitted data can provide privacy and confidentiality.

From the prior art so-called Virtual Private Networks (VPN) are known to provide communications security by means of crypto-security. A VPN extends a private network across a shared or public network, like the internet, and enables a communication source, like a user device, to send and receive data across a shared or public network to a communication destination as if the communication source and the communication destination were directly connected to each other in a private network. A VPN is created by establishing a virtual point-to-point connection by tunneling the transmitted data through the shared or public network by means of crypto-security. Thus, using a VPN the communication between the communication source and the communication destination over the shared or public network benefits from the functionality, security and management policies of the private network. From a user perspective, the communication source, i.e. the user device, is located in the private network and can access all resources of the private network. To establish a VPN between the communication source (user device) and the communication destination (private network) VPN implementations must be available at the communication source and the communication destination. Further, before using VPN it must be established by the user of the communication source, with corresponding amount of effort.

A system and method for providing privacy and confidentiality using a VPN is for example disclosed in US 8,015,406 B2. According to US 8,015,406 B2 the communication source runs a client application which contains an integrated virtual network adapter driver, which is capable of transmitting and receiving data through the communication source's physical network adapter. The virtual network adapter acts as an intermediary between the operating system of the communication source and the physical network adapter of the communication source. The communication destination according to US 8,015,406 B2 comprises components to communicate with the virtual network adapter of the communication destination.

US 2013/0081132 A1 discloses an apparatus for providing a virtual private network (VPN) service based on mutual authentication, the apparatus including: a storage unit configured to store a first public key and a second public key; an authentication unit configured to authenticate a VPN server with the first public key and to authenticate a user device with the second public key; and a tunnel management unit configured to generate a first VPN tunnel and a second VPN tunnel to relay data between the user device and the VPN server based on the authentication of the VPN server and the user device by the authentication unit.

US 2006/0090074 A1 discloses an encryption communication system with a communication relay device that connects a first network and a second network for encrypting a communication within the first network and a communication within the second network in a network system configured so that communications are performed between a client in the first network and a server in the second network via the communication relay device, wherein the communication relay device comprises: a key generation unit generating an encryption key and a decryption key with respect to the client; a key transfer unit transmitting the encryption key and the decryption key to the server. Therein, the server comprises: a frame receiving unit decrypting a receipt frame by use of the decryption key; and a frame transmitting unit encrypting the frame by use of the encryption key and thus transmitting the frame.

A further system and method for providing communications security, like privacy and confidentiality, to an end-to-end communication connection is incorporated into the second major version of the Hypertext Transfer Protocol (HTTP/2.0 or HTTP/2) which uses the Transport Layer Security (TLS) Protocol to provide crypto-security. Although the standard itself does not require usage of encryption, most client implementations, like common used browsers, have announced that HTTP/2 will only be supported over TLS, which makes encryption de facto mandatory. TLS and its predecessor, Secure Socket Layer (SSL), are a cryptographic protocols designed to provide communications security over a computer network. Asymmetric cryptography, like certificates, is used to authenticate the counterparty with whom they are communicating and to negotiate a symmetric session key. This session key is afterwards used to encrypt data transmitted between the communication source and the communication destination. This provides data confidentiality, message integrity and message authentication.

However, the user of HTTP/2 has to trust the vendor of the client implementations, like browser vendors, that the client implementation itself is trustful and that only connections to trustful communication destinations are established. Usually the user has not a contract or any other business relationship to the vendor of client implementations of HTTP/2 because the client implementations are normally available for free. Thus, the user has to supervise the behavior of the client implementation or to trust this client implementation. Furthermore, such client implementations of HTTP/2 are designed for a plurality of users with different requirements with respect to communications security. Since it is an aim of the vendors of HTTP/2 client implementations that the client implementation is widely used it is likely that the communications security standards will be set to a level in common for most users. User having different requirements, particularly higher requirements, regarding communications security must adapt the client implementation to realize these particular requirements. Further, the HTTP/2 client implementation establishes a communication connection including communications security in case the client implementation regards the communication destination as trustful. Again, since these HTTP/2 client applications are designed for a plurality of users the corresponding standards will be most likely set to a level in common for most users.

Thus, the user has to trust the vendor of the HTTP/2 client implementation or to adapt the client implementation to his needs. Furthermore, the user has to decide on and eventually adapt every single HTTP/2 client implementation he is using.

It is therefore an object of the present invention to provide communications security, like privacy and confidentiality, to an end-to-end communication connection, where the user can easily implement and adapt his communications security requirements and particularly wherein these communications security requirements are afterwards applied to communication connections requested by the user.

The object is solved according to the invention by a network device for providing communications security in accordance with the appended claims.

The inventive network device advantageously comprises a first network interface for communicating with a user device, a second network interface for communicating with a communication destination and a control unit for establishing a first communication connection between the first network interface and the user device and a second communication connection between the second network interface and the communication destination.

The network device according to the invention receives at the first network interface a request from the user device to establish an end-to-end communication connection between the user device and the communication destination. When receiving such a request to establish the end-to-end communication connection from the user device the network device contacts an authentication unit to authenticate the user device and/or the user of the user device to the network device. The authentication unit is either integrated into the network device or located in a communication network so that the network device can communicate with the authentication unit. The network device can for example communicate with the authentication unit located in a communication network using the second network interface, which at this time is not in use, or using a further network interface. By authenticating the user device and/or the user of the user device to the network device the network device can apply specific communications security characteristics to the requested end-to-end communication connection. The specific communications security characteristics are applied to the end-to-end communication connection by an encryption unit for encrypting and decrypting data transmitted over the first communication connection and for encrypting and decrypting data transmitted over the second communication connection. By encrypting data transmitted over the first communication connection and encrypting data transmitted over the second communication connection the inventive network device provides privacy and confidentiality by means of crypto-security.

The encryption according to the invention is preferably based on the Secure Socket Layer (SSL), Transport Layer Security (TLS) or another encryption protocol.

Communications security characteristics according to the invention comprise user preferences and/or user permissions, particularly regarding the encryption of data transmitted over the end-to-end communication connection.

The user of the user device sends a request to establish an end-to-end communication between the user device and the communication destination without taking care of the communications security characteristics. The network device provides the privacy and confidentiality by authenticating the user device or the user of the user device and applying communications security characteristics assigned to the user, the user device, the kind of user and/or the kind of user device. The communications security characteristics assigned to the user, the user device, the kind of user and/or the kind of user device can advantageously be different for each end-to-end communication connection or for different types of end-to-end communication connections.

According to a preferred aspect of the invention the network device further comprises a database or a communication connection to a database in a communication network which assigns communications security characteristics to users, user devices, kind of users and/or kind of user devices. The network device can for example communicate with the database located in a communication network using the second network interface, which at this time is not in use, or using a further network interface. The database can for example map communications security characteristics like preferences and permissions to individual users or individual user devices or kind of users or kind of user devices. The inventive network device requests from the database the communications security characteristics associated to the user, the user device, the kind of user and/or the kind of user device which has been previously authenticated by the authentication unit. The encryption unit of the inventive network device uses the requested communications security characteristics requested from the database to encrypt data transmitted over the first communication connection and encrypt data transmitted over the second communication connection to implement the communications security characteristics of the user, the user device, the kind of user or the kind of user device.

Alternatively the user device and/or the user of the user device can include the communications security characteristics into the request send from the user device to the network device.

According to an aspect of the invention the network device further comprising one or more additional network interfaces for communicating with units or databases located in a communication network, like an authentication unit and/or database which assigns communications security characteristics to users, user devices, kind of users and/or kind of user devices.

According to a preferred aspect of the invention the network device is part of a mobile communication network, especially a Node B of an UMTS mobile communication network or an evolved Node B of a LTE mobile communication network. Usually a mobile communication network comprises an authentication unit for authenticating at least the user device and/or the user of the user device to a component of the mobile communication network, especially since a user device can only connect to a mobile communication network after a positive authentication. This authentication is for example achieved by authentication keys stored in the Subscriber Identity Module (SIM) of a mobile device and in the Authentication Center (AuC) of a mobile communication network, especially in the Home Location Register (HLR). This authentication key can preferably be used in combination with the International Mobile Subscriber Identity (IMSI) of the mobile device during the authentication. The authentication unit of the mobile communication network can be used by the network device according to the invention to authenticate at least the user device and/or the user of the user device to the network device. A further advantage of this aspect is that the user of a mobile communication network has some kind of contract with the mobile communication network provider. Thus, there exists an agreement between the user and the mobile communication network provider which the user can trust on. This is a major improvement compared to client implementations of other vendors, like browser vendors or Over-The-Top providers, which usually do not have such a contract with the user, except of terms and conditions provided by the vendor and relating to the use of the client implementation.

Furthermore, the user can agree with the mobile communication network provider on preferred communications security characteristics, which will afterwards be applied to all communication connections requested by the user, respectively by the user's device. Thus, the user has a single contact point, namely the mobile communication provider, for all future communication connections and the communications security characteristics of these communication connections.

Advantageously the embodiments of the present invention are not limited to connections established using a mobile communication network, like an UMTS- or LTE- mobile communication network. The connection request advantageously could also originate from other communication networks, like e.g. WLAN, as long as the request is send by the user device to the inventive network device, which is preferably located within a mobile communication network.

In a further preferred aspect of the invention the network device comprises a data analysing unit for analysing data transmitted between the user device and the communication destination, wherein the data analysing unit preferably provides one or more of the following services to the user device: traffic and/or activity monitoring, data analytics, behaviour analysis, load-balancing, anomaly detection, malware detection, performance enhancing proxy, advanced advertising, URL filtering, parental control, and the like. The data analysing unit for analysing data transmitted between the user device and the communication destination can advantageously provide useful additional services to the user and/or user device, especially with respect to security issues or performance. For example the data analysing unit can provide an anomaly and/or malware detection for all communication connections of the user device respectively of the user which are received by the inventive network device. Load-balancing and performance enhancing proxy can advantageously enhance the performance of the communication connection. All the above mentioned services and more can be provided by the data analysing unit to the user device and/or the user. Thus, the inventive network device can provide additional services to the user and/or user device and the user and/or user device advantageously do not have to care about such services. Usually the user has to install additional software components to provide these services, which are often linked to additional costs and further stress the battery of the user device, especially in case of mobile devices.

According to a further aspect of the invention the network device comprises a data processing unit for processing data transmitted between the user device and the communication destination, wherein the data processing unit preferably provides one or more of the following services to the user device: transrate and/or compress video, image compression, modifying IP address information, namely Network Address Translation, content caching, and the like. The data processing unit can provide further useful services to the user of a user device and/or the user device, particularly with respect to the performance of a communication connection and/or the computational load of the user device, especially in case of a mobile device.

It is advantageous to provide the services of the data analysing unit and/or the data processing unit at the network device to reduce for example the computational load or memory requirements of the user device. Further it is easier for the user to adjust all relevant characteristics at a single point, namely the network device, instead of adjusting characteristics using multiple software components at the user device.

In a further advantageous aspect of the present invention the inventive network device comprises a billing unit for gathering and processing information with respect to billing services to the user device and/or the user of the user device. Particularly when providing additional services, for example using a data analysing unit and/or data processing unit, the operator of the network device will eventually charge the services to the user device respectively to the user of the user device. Therefore the network device can comprise an additional billing unit. Alternatively, the network device can use an existing billing unit, for example an already existing billing unit in a mobile communication network, for billing purposes. In this case the used services will be charged for example to the user with his usual monthly bill. Further, the operator of the network device can include additional services into a premium contract so that the customer must not care about additional charges.

According to a preferred aspect of the invention the communication destination is a server, a service provider, another network device, another user device or any other kind of device suitable as a communication endpoint.

In an advantageous aspect of the invention the user device is a mobile device, particularly a mobile phone, a smartphone or a tablet-PC, a Personal Computer (PC) or a laptop device.

Preferably the inventive network device automatically applies the following inventive method in case the user device sends a request for establishing an end-to-end communication connection to the network device implementing the inventive method.

The object is further solved according to the invention by a method for providing communications security in accordance with the appended claims.

According to the inventive method a network device receives at a first network interface a request from a user device to establish an end-to-end communication connection between the user device and a communication destination. When receiving from the user device such a request to establish the end-to-end communication connection the user device and/or the user of the user device is authenticated to the network device for example by means of an authentication unit.

The authentication unit is either integrated into the network device or located in a communication network so that the network device can communicate with the authentication unit. The network device can for example communicate with the authentication unit located in a communication network using the second network interface, which at this time is not in use, or using a further network interface. By authenticating the user device and/or the user of the user device to the network device the network device can apply specific communications security characteristics to the requested end-to-end communication connection.

After authenticating the user device and/or the user of the user device a first communication connection between a first network interface of the network device and the user device and a second communication connection between a second network interface of the network device and the communication destination are established.

The specific communications security characteristics are advantageously applied to the end-to-end communication connection by an encryption unit for encrypting and decrypting data transmitted over the first communication connection and for encrypting data transmitted over the second communication connection. By encrypting data transmitted over the first communication connection and encrypting data transmitted over the second communication connection the inventive network device provides privacy and confidentiality by means of crypto-security.

The user of the user device can send the request to establish an end-to-end communication connection between the user device and the communication destination without taking care of the communications security characteristics. The inventive method provides the privacy and confidentiality by authenticating the user device or the user of the user device and applying communications security characteristics assigned to the user, the user device, the kind of user and/or the kind of user device. The communications security characteristics assigned to the user, the user device, the kind of user and/or the kind of user device can be different for each end-to-end communication connection or for different types of end-to-end communication connections.

In a preferred aspect of the invention users and/or user devices can be grouped to kind of users and/or kind of user devices. These kind of users or kind of user devices have identical or very similar communications security characteristics requirements, so that they can be grouped and afterwards be treated alike. Preferably the grouping is performed by the inventive network device of the communication network or another unit of the communication network.

According to a preferred aspect of the invention the method comprises the further step of requesting from a database which assigns communications security characteristics to the users, the user devices, the kind of users and/or the kind of user devices the security characteristics associated to the user, the user device, the kind of user and/or the kind of user device which has been previously authenticated. The database can be located in a network device implementing the inventive method or be located in a communication network so that the network device implementing the inventive method can communicate with the database. The network device can for example communicate with the database located in a communication network using the second network interface, which at this time is not in use, or using a further network interface.

Alternatively the user device and/or the user of the user device can include the communications security characteristics into the request send from the user device to the network device.

In a preferred aspect of the invention the inventive method comprises the further step of collecting communications security characteristics associated to user devices, user of user devices, kind of user devices and/or kind of users of user devices and storing these collected communications security characteristics into the database.

Communications security characteristics according to the invention comprise user preferences and/or user permissions, particularly regarding the encryption of data transmitted over the end-to-end communication connection.

The database can for example map communications security characteristics like preferences and/or permissions to individual users, individual user devices, kind of users and/or kind of user devices.

The inventive method requests from the database the communications security characteristics associated to the user, the user device, the kind of user and/or the kind of user device which has been previously authenticated by the authentication unit. During the following inventive encryption the requested communications security characteristics requested from the database are considered and the data transmitted over the first communication connection and the data transmitted over the second communication connection are encrypted in such a way to implement the communications security characteristics of the user, the user device, the kind of user and/or the kind of user device.

In a preferred aspect of the invention the inventive method is executed by a network device which is part of a mobile communication network, especially a Node B of a UMTS mobile communication network or an evolved Node B of a LTE mobile communication network.

According to a preferred aspect of the invention the inventive method further comprising the step of analysing data transmitted between the user device and the communication destination, wherein the analysing preferably implements one or more of the following services to the user device: traffic and/or activity monitoring, data analytics, behaviour analysis, load-balancing, anomaly detection, malware detection, performance enhancing proxy, advanced advertising, URL filtering, parental control, and the like. The step of analysing data transmitted between the user device and the communication destination can provide useful additional services to the user and/or user device, especially with respect to security issues or performance. For example the analysing can provide an anomaly and/or malware detection for all communication connections of the user device respectively of the user which are received by the network device implementing the inventive method. Load-balancing and performance enhancing proxy can enhance the performance of the communication connection. All the above mentioned service and more can be provided by the analysing of data transmitted between the user device and the communication destination. Thus, the inventive method can provide additional services to the user and/or user device and the user and/or user device do not have to care about such services. Usually the user has to install additional software components to provide these services, which are often linked to additional costs and further stress the battery of the user device, especially in case of mobile devices. The analysing is for example advantageously implemented in an analysing unit of a network device implementing the inventive method.

According to a further preferred aspect of the invention the inventive method further comprises the step of processing data transmitted between the user device and the communication destination, wherein the data processing preferably provides one or more of the following services to the user device: transrate and/or compress video, image compression, modifying IP address information, namely Network Address Translation, content caching, and the like. The data processing provides further useful services to the user of a user device and/or the user device, particularly with respect to the performance of a communication connection and/or the computational load of the user device, especially in case of a mobile device. The processing is for example advantageously implemented in a processing unit of a network device implementing the inventive method.

According to a further preferred aspect of the invention the inventive method further comprises the step of billing services to the user device and/or the user of the user device. The billing can be performed by a billing unit for gathering and processing information with respect to billing services to the user device and/or the user of the user device. Particularly when providing additional services, like analysing and/or processing transmitted data, the provider of these services will eventually charge the user device respectively the user of the user device. Therefore for example a network device implementing the inventive method can comprise an additional billing unit. Alternatively, the inventive method can use an existing billing unit, for example already existing in a mobile communication network, for billing purposes. In this case the used services will be charged for example to the user with his usual monthly bill. Further, the provider of the above mentioned services can include such additional services into a premium contract so that the customer must not care about additional charges.

According to a preferred aspect of the invention the communication destination is a server, a service provider, another network device, another user device or any other kind of device suitable as a communication endpoint.

In an advantageous aspect of the invention the user device is a mobile device, particularly a mobile phone, a smartphone or a tablet-PC, a Personal Computer (PC) or a laptop device.

Preferably the inventive method comprises the further step of automatically applying the inventive method in case the user device sends a request for establishing an end-to-end communication connection to a network device implementing the inventive method.

According to an advantageous aspect of the invention the function of a specific unit, like the encryption unit, of the inventive network device and/or a specific unit performing one or more steps of the inventive method can be split to multiple units to enhance the performance.

The aforementioned aspects of the present invention can be combined with each other in any possible combination, unless the contrary is explicitly stated.

Further details, characteristics and advantages of the invention are explained in the following in more detail based on the description of the exemplary embodiments shown in the figures of the drawings. In these figures:
- Fig. 1: shows a schematic view of a communication network with a network device according to the invention; and
- Fig. 2: shows a flow diagram of the inventive method.

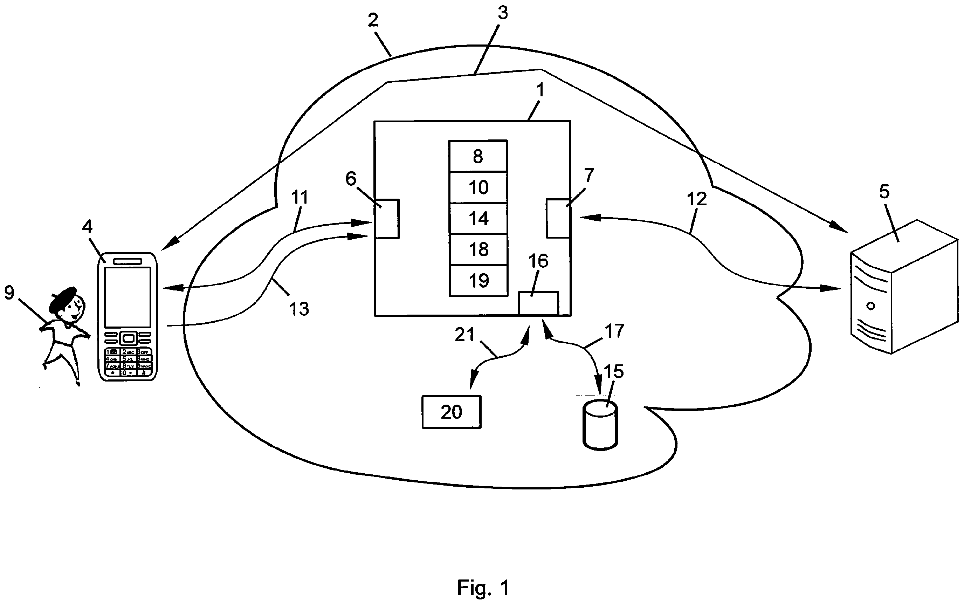

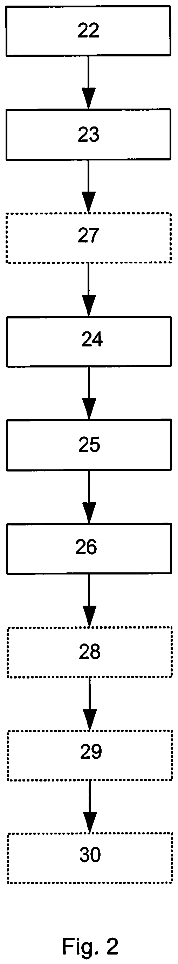

In the following the invention will be explained with respect to embodiments shown in Figs. 1 and 2; however, the invention is not limited thereto, and may be practiced in many other embodiments. Aspects described with respect to the embodiments of Figs. 1 and 2 are not limited thereto, unless otherwise explicitly stated, and maybe combined with general aspects of the invention as previously described. Furthermore, various changes and modifications are possible within the scope of the inventive concept. In particular, features of any of the embodiments can be combined with features of other embodiments and/or features disclosed in the general description of the invention.

Fig. 1 shows a system with an inventive network device 1 in a communication network 2, wherein the network device 1 provides communications security, like privacy and confidentiality, to an end-to-end communication connection 3. The end-to-end communication connection 3 with communications security will be established between a user device 4 and a communication destination 5.

The network device 1 comprises a first interface 6 for communicating with the user device 4 and a second network interface 7 for communicating with the communication destination 5.

The network device 1 further comprises an authentication unit 8. Alternatively the authentication unit 8 could be located in the communication network 2 or a further communication network (not shown) and the network device 1 comprises a communication connection to the authentication unit 8 located in the further communication network. The authentication unit 8 is used for authenticating 23 at least the user device 4 and/or the user 9 of the user device 4 to the network device 1.

The network device 1 comprises a control unit 10 for establishing 24, 25 a first communication connection 11 between the first network interface 6 and the user device 4 and a second communication connection 12 between the second network interface 7 and the communication destination 5. The first communication connection 11 and the second communication connection 12 will be established 24, 25 in response to a request 13 from the user device 4 to establish the end-to-end communication connection 3 between the user device 4 and the communication destination 5.

Further, the network device 1 comprises an encryption unit 14 for encrypting 26 and decrypting data transmitted over the first communication connection 11 and for encrypting 26 and decrypting data transmitted over the second communication connection 12. By encrypting 26 data transmitted over the first communication connection 11 and encrypting 26 data transmitted over the second communication connection 12 the inventive network device 1 provides privacy and confidentiality by means of crypto-security.

The system of Fig. 1 further comprises a database 15 which assigns communications security characteristics to users 9, user devices 4, kind of users and/or kind of user devices. The database 15 is located in communication network 2; however, database 15 could alternatively be located in a further communication network (not shown) or inside network device 1. Network device 1 comprises a third network interface 16 to establish a third communication connection 17 between the network device 1 and database 15. Alternatively network device 1 could use the first network interface 6 or the second network interface 7 for the third communication connection 17 to database 15. For example the second network interface 7 is not used when requesting 27 communications security characteristics from database 15. In case database 15 is located inside network device 1 no network interface 6, 7, 16 is necessary for establishing the third communication connection 17.

The third (additional) network interface 16 can further be used for communicating with other units, like an authentication unit 8 or a billing unit 20 located in communication network 2 or in a further communication network (not shown).

The communication network 2 can be a mobile communication network, particularly according to the UMTS- or LTE standard. Network device 1 is part of the mobile communication network, and especially is a Node B of a UMTS mobile communication network or an evolved Node B of a LTE mobile communication network. However, it should be appreciated that the invention is not limited to mobile communication networks and even in case the network device 1 is part of a mobile communication network the first communication connection 11 between the user device 4 and the network device 1 is not limited to a mobile communication standard, like e.g. GPRS, UMTS or LTE. For example the request 13 could be send to the network device 1 over a Wireless Local Area Network (WLAN). In general it is not important in what kind of communication network 2 the inventive network device 1 is located as long as the request is send from the user device 4 to the network device 1 and the network device 1 is able to establish the end-to-end communication connection 3 between the user device 4 and the communication destination 5. This end-to-end communication connection could for example be established over multiple communications networks 2.

The network device 1 of Fig. 1 further comprises a data analysing unit 18 for analysing 28 data transmitted between the user device 4 and the communication destination 5, wherein the data analysing unit 18 preferably provides one or more of the following services to the user device 4: traffic and/or activity monitoring, data analytics, behaviour analysis, load-balancing, anomaly detection, malware detection, performance enhancing proxy, advanced advertising, URL filtering, parental control, and the like. The data analysing unit 18 for analysing 28 data transmitted between the user device 4 and the communication destination 5 can provide useful additional services to the user 9 and/or user device 4, especially with respect to security issues or performance. For example the data analysing unit 18 can provide an anomaly and/or malware detection for all end-to-end communication connections 3 of the user device 4 respectively of the user 9 which are received by the inventive network device 1. Load-balancing and performance enhancing proxy can enhance the performance of the end-to-end communication connection 3. All the above mentioned services and more can be provided by the data analysing unit 18 to the user device 4 and/or the user 9. Thus, the inventive network device 1 can provide additional services to the user 9 and/or user device 4 and the user 9 and/or user device 4 do not have to care about such services. Usually the user 9 has to install additional software components to provide these services, which are often linked to additional costs and further stress the battery of the user device 4, especially in case of mobile devices.

Furthermore, the network device 1 of Fig. 1 comprises a data processing unit 19 for processing 29 data transmitted between the user device 4 and the communication destination 5, wherein the data processing unit 19 preferably provides one or more of the following services to the user device 4: transrate and/or compress video, image compression, modifying IP address information, namely Network Address Translation, content caching, and the like. The data processing unit 19 can provide further useful service to the user 9 of a user device 4 and/or the user device 4, particularly with respect to the performance of an end-to-end communication connection 3 and/or the computational load of the user device 4, especially in case of a mobile device.

Particularly when providing additional services, for example using a data analysing unit 18 and/or data processing unit 19, the operator of the network device 1 will eventually charge the services to the user device 4 respectively to the user 9 of the user device 4. Therefore the network device 1 can comprise an additional billing unit 20 or communicate with a billing unit 20 located in communication network 2 or a further communication network (not shown) for gathering and processing information with respect to billing services to the user device 4 and/or the user 9 of the user device 4. Alternatively, the network device 1 can use an existing billing unit 18, for example already existing in a communication network 2, for billing purposes. According to the embodiment of Fig. 1 the network device 1 uses billing unit 20 of the communication network 2 and communicates with the billing unit 20 over a fourth communication connection 21 between the third network interface 16 of network device 1.

The communication destination 5 can be a server, a service provider, another network device, another user device or any other kind of device suitable as a communication endpoint and the user device 4 can be a mobile device, particularly a mobile phone, a smartphone or a tablet-PC, or any other kind of device suitable as a communication endpoint, like a Personal Computer (PC) or a laptop device.

Fig. 2 a flow diagram of an inventive method for providing communications security, like privacy and confidentiality, to an end-to-end communication connection 3. The method comprises the steps of:
- receiving 22 at a network device 1 from a user device 4 a request 13 for establishing an end-to-end communication connection 3 between the user device 4 and a communication destination 5;
- authenticating 23 at least the user device 4 and/or the user 9 of the user device 4 to the network device 1;
- establishing 24 a first communication connection 11 between a first network interface 6 of the network device 1 and the user device 4;
- establishing 25 a second communication connection 12 between a second network interface 7 of the network device 1 and the communication destination 5;
- encrypting 26 data transmitted over the first communication connection 11 and encrypting 26 data transmitted over the second communication connection 12.

According to the inventive method a network device 1 receives 22 at a first network interface 6 a request 13 from a user device 4 to establish an end-to-end communication connection 3 between the user device 4 and a communication destination 5. When receiving 22 from the user device 4 such a request 13 to establish the end-to-end communication connection 3 the user device 4 and/or the user 9 of the user device 4 is authenticated 23 to the network device 1 for example by means of an authentication unit 8. By authenticating 23 the user device 4 and/or the user 9 of the user device 4 to the network device 1 the network device 1 can apply specific communications security characteristics to the requested end-to-end communication connection 3.

After authenticating 23 the user device 4 and/or the user 9 of the user device 4 a first communication connection 11 between a first network interface 6 of the network device 1 and the user device 4 and a second communication connection 12 between a second network interface 7 of the network device 1 and the communication destination 5 are established 24, 25.

The specific communications security characteristics are applied to the end-to-end communication connection 3 by an encryption unit 14 for encrypting 26 and decrypting data transmitted over the first communication connection 11 and for encrypting 26 and decrypting data transmitted over the second communication connection 12.

The user 9 of the user device 4 can send the request 13 to establish an end-to-end communication connection 3 between the user device 4 and the communication destination 5 without taking care of the communications security characteristics. The inventive method provides the privacy and confidentiality by authenticating 23 the user device 4 or the user 9 of the user device 4 and applying communications security characteristics assigned to the user 9, the user device 4, the kind of user and/or the kind of user device. The communications security characteristics assigned to the user 9, the user device 4, the kind of user and/or the kind of user device can be different for each end-to-end communication connection 3 or for different types of end-to-end communication connections.

The inventive method can comprise the further optional step of requesting 27 from a database 15 which assigns communications security characteristics to users 9, user devices 4, kind of users and/or kind of user devices the security characteristics associated to the user 9, the user device 4, the kind of user and/or the kind of user device which has been previously authenticated 23. In Fig. 2 optional steps are indicated by a box with dashed lines.

Alternatively for example the user device 4 and/or the user 9 of the user device 4 can include the communications security characteristics into the request 13 send from the user device 4 to the network device 1.

The inventive method can further comprise the optional steps of analyzing 28 and or processing 29 data transmitted between the user device 4 and the communication destination 5, wherein the analyzing 28 and/or processing 29 implement one or more of the following services to the user device 4: traffic and/or activity monitoring, data analytics, behaviour analysis, load-balancing, anomaly detection, malware detection, performance enhancing proxy, advanced advertising, URL filtering, parental control, transrate and/or compress video, image compression, modifying IP address information, namely Network Address Translation, content caching, and the like. The analysing 28 and/or processing 29 of data transmitted between the user device 4 and the communication destination 5 is performed after the end-to-end communication connection 3 has been established and is preferably performed until the end-to-end communication connection 3 is terminated.

Preferably the inventive method comprises the further step of billing 30 services to the user device 4 and/or the user 9 of the user device 4. The charged services can be for example the service of the network device 1 itself and/or the additional service like data analysing 28 and/or data processing 29.

Advantageously the inventive method is automatically executed in case the user device 4 sends a request 13 for establishing an end-to-end communication connection 3 to a network device 1 implementing the inventive method.

### List of references

- 1: network device
- 2: communication network
- 3: end-to-end communication connection
- 4: user device
- 5: communication destination
- 6: first network interface
- 7: second network interface
- 8: authentication unit
- 9: user
- 10: control unit
- 11: first communication connection
- 12: second communication connection
- 13: request
- 14: encryption unit
- 15: database
- 16: third network interface
- 17: third communication connection
- 18: data analyzing unit
- 19: data processing unit
- 20: billing unit
- 21: fourth communication connection
- 22: receiving
- 23: authenticating
- 24: establishing first communication connection
- 25: establishing second communication connection
- 26: encrypting
- 27: requesting database
- 28: analyzing data
- 29: processing data
- 30: billing

## Claims

1. Network device (1) for providing communications security, comprising privacy and confidentiality, to an end-to-end communication connection (3) comprising:
- a first network interface (6) for communicating with a user device (4);
- a second network interface (7) for communicating with a communication destination (5);
- an authentication unit (8) or a communication connection to an authentication unit (8) located in a communication network (2) for authenticating (23) at least the user device (4) and/or the user (9) of the user device (4) to the network device (1);
- a control unit (10) for establishing (24, 25) a first communication connection (11) between the first network interface (6) and the user device (4) and a second communication connection (12) between the second network interface (7) and the communication destination (5) in response to a request (13) from the user device (4) to establish the end-to-end communication connection (3) between the user device (4) and the communication destination (5), wherein the request (13) is sent from the user device (4) to the network device (1) without taking care of communications security characteristics; and
- an encryption unit (14) for encrypting (26) and decrypting data transmitted over the first communication connection (11) and for encrypting (26) and decrypting data transmitted over the second communication connection (12).

2. Network device (1) according to claim 1, further comprising a database (15) or a communication connection (17) to a database (15) in a communication network (2) which assigns communications security characteristics to users (9), user devices (4), kind of users and/or kind of user devices.

3. Network device (1) according to claim 1 or claim 2, further comprising one or more additional network interface (16) for communicating with units (8, 20) or databases (15) located in a communication network (2).

4. Network device (1) according to one of claims 1 to 3, wherein the network device (1) is part of a mobile communication network, especially a Node B of a UMTS mobile communication network or an evolved Node B of a LTE mobile communication network.

5. Network device (1) according to one of claims 1 to 4, further comprising a data analysing unit (18) for analysing (28) data transmitted between the user device (4) and the communication destination (5), wherein the data analysing unit (18) preferably provides one or more of the following services to the user device (4): traffic and/or activity monitoring, data analytics, behaviour analysis, load-balancing, anomaly detection, malware detection, performance enhancing proxy, advanced advertising, URL filtering, parental control.

6. Network device (1) according to one of claims 1 to 5, further comprising a data processing unit (19) for processing (29) data transmitted between the user device (4) and the communication destination (5), wherein the data processing unit (19) preferably provides one or more of the following services to the user device (4): transrate and/or compress video, image compression, modifying IP address information, namely Network Address Translation, content caching.

7. Network device (1) according to one of claims 1 to 6, further comprising a billing unit (20) for gathering and processing information with respect to billing (30) services to the user device (4) and/or the user (9) of the user device (4).

8. Network device (1) according to one of claims 1 to 7, wherein the communication destination (5) is a server, a service provider, another network device, another user device or any other kind of device suitable as a communication endpoint.

9. Network device (1) according to one of claims 1 to 8, wherein the user device (4) is a mobile device, particularly a mobile phone, a smartphone or a tablet-PC, a Personal Computer (PC) or a laptop device.

10. Method for providing communications security, comprising privacy and confidentiality, to an end-to-end communication connection (3) comprising the steps of:
- receiving (22) at a network device (1) from a user device (4) a request (13) for establishing an end-to-end communication connection (3) between the user device (4) and a communication destination (5), wherein the request (13) is sent from the user device (4) to the network device (1) without taking care of communications security characteristics;
- authenticating (23) at least the user device (4) and/or the user (9) of the user device (4) to the network device (1);
- establishing (24) a first communication connection (11) between a first network interface (6) of the network device (1) and the user device (4);
- establishing (25) a second communication connection (12) between a second network interface (7) of the network device (1) and the communication destination (5);
- encrypting (26) data transmitted over the first communication connection (11) and encrypting (26) data transmitted over the second communication connection (12).

11. Method according to claim 10, further comprising the step of requesting (27) from a database (15) which assigns communications security characteristics to users (9), user devices (4), kind of users and/or kind of user devices the security characteristics associated to the user (9), the user device (4), the kind of user and/or the kind of user device which has been previously authenticated (23).

12. Method according to claim 10 or claim 11, further comprising the step of analysing (28) data transmitted between the user device (4) and the communication destination (5), wherein the analysing (28) preferably implements one or more of the following services to the user device (4): traffic and/or activity monitoring, data analytics, behaviour analysis, load-balancing, anomaly detection, malware detection, performance enhancing proxy, advanced advertising, URL filtering, parental control.

13. Method according to one of claims 10 to 12, further comprising the step of processing (29) data transmitted between the user device (4) and the communication destination (5), wherein the data processing (29) preferably provides one or more of the following services to the user device (4): transrate and/or compress video, image compression, modifying IP address information, namely Network Address Translation, content caching.

14. Method according to one of claims 10 to 13, further comprising the step of billing (30) services to the user device (4) and/or the user (9) of the user device (4).

## Patentansprüche

1. Netzvorrichtung (1) zur Schaffung von Kommunikationssicherheit mit Datenschutz und Vertraulichkeit für eine Ende-zu-Ende-Kommunikationsverbindung (3) umfassend:
- eine erste Netzschnittstelle (6) zur Kommunikation mit einer Nutzervorrichtung (4);
- eine zweite Netzschnittstelle (7) zur Kommunikation mit einem Kommunikationsziel (5);
- eine Authentifizierungseinheit (8) oder eine Kommunikationsverbindung zu einer in einem Kommunikationsnetz (2) angeordneten Authentifizierungseinheit (8) zur Authentifizierung (23) zumindest einer Nutzervorrichtung (4) und/oder des Nutzers (9) der Nutzervorrichtung (4) an der Netzvorrichtung (1);
- eine Steuereinheit (10) zum Aufbau (24, 25) einer ersten Kommunikationsverbindung (11) zwischen der ersten Netzschnittstelle (6) und der Nutzervorrichtung (4) und einer zweiten Kommunikationsverbindung (12) zwischen der zweiten Netzschnittstelle (7) und dem Kommunikationsziel (5) in Reaktion auf eine Anfrage (13) von der Nutzervorrichtung (4) zum Aufbau der Ende-zu-Ende-Kommunikationsverbindung (3) zwischen der Nutzervorrichtung (4) und dem Kommunikationsziel (5), wobei die Anfrage (13) ohne Berücksichtigung von Kommunikations-Sicherheitsmerkmalen von der Nutzervorrichtung (4) an die Netzvorrichtung (1) gesendet wird; und
- eine Verschlüsselungseinheit (14) zum Verschlüsseln (26) und Entschlüsseln der über die erste Kommunikationsverbindung (11) übermittelten Daten und zum Verschlüsseln (26) und Entschlüsseln der über die zweite Kommunikationsverbindung (12) übermittelten Daten.

2. Netzvorrichtung (1) nach Anspruch 1, ferner aufweisend eine Datenbank (15) oder eine Kommunikationsverbindung (17) zu einer Datenbank (15) in einem Kommunikationsnetz (2), die Nutzern (9), Nutzervorrichtungen (4), einer Art von Nutzern und/oder einer Art von Nutzervorrichtungen Kommunikations-Sicherheitsmerkmale zuordnet.

3. Netzvorrichtung (1) nach Anspruch 1 oder Anspruch 2, ferner umfassend eine oder mehrere zusätzliche Netzschnittstellen (16) zur Kommunikation mit in einem Kommunikationsnetz (2) angeordneten Einheiten (8, 20) oder Datenbanken (15).

4. Netzvorrichtung (1) nach einem der Ansprüche 1 bis 3, wobei die Netzvorrichtung (1) Teil eines mobilen Kommunikationsnetzes, insbesondere eines Node B eines mobilen UMTS-Kommunikationsnetzes oder eines evolved Node B eines mobilen LTE-Kommunikationsnetzes ist.

5. Netzvorrichtung (1) nach einem der Ansprüche 1 bis 4, ferner aufweisend eine Datenanalyseeinheit (18) zum Analysieren (28) von zwischen der Nutzervorrichtung (4) und dem Kommunikationsziel (5) übermittelten Daten, wobei die Datenanalyseeinheit (18) vorzugsweise einen oder mehrere der folgenden Dienste an die Nutzervorrichtung (4) bereitstellt: Verkehrs- und/oder Aktivitätsüberwachung, Datenanalytik, Verhaltensanalyse, Lastverteilung, Anomalie-Erkennung, Malware-Erkennung, leistungssteigernde Proxy, erweiterte Werbung; URL-Filterung, elterliche Kontrolle.

6. Netzvorrichtung (1) nach einem der Ansprüche 1 bis 5, ferner umfassend eine Datenverarbeitungseinheit (19) zum Verarbeiten (29) von zwischen der Nutzervorrichtung (4) und dem Kommunikationsziel (5) übermittelten Daten, wobei die Datenverarbeitungseinheit (19) vorzugsweise einen oder mehrere der folgenden Dienste für die Nutzervorrichtung (4) bereitstellt: Videoumwandlung und/oder -komprimierung, Bildkomprimierung, Modifizierung von IP-Adressinformationen, nämlich Netzwerkadressübersetzung, Inhalts-Zwischenspeicherung.

7. Netzvorrichtung (1) nach einem der Ansprüche 1 bis 6, ferner aufweisend eine Abrechnungseinheit (20) zum Erfassen und Verarbeiten von Informationen hinsichtlich des Abrechnens (30) von Diensten gegenüber der Nutzervorrichtung (4) und/oder dem Nutzer (9) der Nutzervorrichtung (4).

8. Netzvorrichtung (1) nach einem der Ansprüche 1 bis 7, wobei das Kommunikationsziel (5) ein Server, ein Diensteanbieter, eine weitere Netzvorrichtung, eine weitere Nutzervorrichtung oder irgendeine andere Art einer als Kommunikationsendpunkt geeigneten Vorrichtung ist.

9. Netzvorrichtung (1) nach einem der Ansprüche 1 bis 8, wobei die Nutzervorrichtung (1) eine mobile Vorrichtung, insbesondere ein Mobiltelefon, ein Smartphone oder ein Tablet-PC, ein Personal Computer (PC) oder eine Laptop-Vorrichtung ist.

10. Verfahren zur Schaffung von Kommunikationssicherheit mit Datenschutz und Vertraulichkeit für eine Ende-zu-Ende-Kommunikationsverbindung (3), umfassend die Schritte:
- Empfang einer Anfrage (13) von einer Nutzervorrichtung (4) zum Aufbau einer Ende-zu-Ende-Kommunikationsverbindung (3) zwischen der Nutzervorrichtung (4) und dem Kommunikationsziel (5) seitens einer Netzvorrichtung (1), wobei die Anfrage (13) ohne Berücksichtigung von Kommunikations-Sicherheitsmerkmalen von der Nutzervorrichtung (4) an die Netzvorrichtung (1) gesendet wird;
- Authentifizierung (23) zumindest der Nutzervorrichtung (4) und/oder des Nutzers (9) der Nutzervorrichtung (4) an der Netzvorrichtung (1);
- Aufbau (24) einer ersten Kommunikationsverbindung (11) zwischen einer ersten Netzschnittstelle (6) der Netzvorrichtung (1) und der Nutzervorrichtung (4);
- Aufbau (25) einer zweiten Kommunikationsverbindung (12) zwischen einer zweiten Netzschnittstelle (7) der Netzvorrichtung (1) und dem Kommunikationsziel (5);
- Verschlüsselung (26) der über die erste Kommunikationsverbindung (11) übermittelten Daten und Verschlüsselung (26) der über die zweite Kommunikationsverbindung (12) übermittelten Daten.

11. Verfahren nach Anspruch 10, ferner umfassend den Schritt des Abrufens (27) von Kommunikations-Sicherheitsmerkmalen, welche dem zuvor authentifizierten Nutzer (9), der zuvor authentifizierten Nutzervorrichtung (4), der zuvor authentifizierten Art des Nutzers und/oder der zuvor authentifizierten Art der Nutzervorrichtung zugeordnet sind, aus einer Datenbank, welche Nutzern (9), Nutzervorrichtungen (4), einer Art von Nutzern und/oder einer Art von Nutzervorrichtungen Kommunikations-Sicherheitsmerkmale zuordnet.

12. Verfahren nach Anspruch 10 oder Anspruch 11, ferner umfassend den Schritt des Analysierens (28) von zwischen der Nutzervorrichtung (4) und dem Kommunikationsziel (5) übermittelten Daten, wobei das Analysieren (28) vorzugsweise einen oder mehrere der folgenden Dienste für die Nutzervorrichtung (4) implementiert: Verkehrs- und/oder Aktivitätsüberwachung, Datenanalytik, Verhaltensanalyse, Lastverteilung, Anomalie-Erkennung, Malware-Erkennung, leistungssteigernde Proxy, erweiterte Werbung; URL-Filterung, elterliche Kontrolle.

13. Verfahren nach einem der Ansprüche 10 bis 12, ferner aufweisend den Schritt des Verarbeitens (29) von zwischen der Nutzervorrichtung (4) und dem Kommunikationsziel (5) übermittelten Daten, wobei die Datenverarbeitung (29) vorzugsweise einen oder mehrere der folgenden Dienste für die Nutzervorrichtung (4) bereitstellt: Videoumwandlung und/oder -komprimierung, Bildkomprimierung, Modifizierung von IP-Adressinformationen, nämlich Netzwerkadressübersetzung, Inhalts-Zwischenspeicherung.

14. Verfahren nach einem der Ansprüche 10 bis 13, ferner aufweisend den Schritt des Abrechnens (30) von Diensten gegenüber der Nutzervorrichtung (4) und/oder dem Nutzer (9) der Nutzervorrichtung (4).

## Revendications

1. Dispositif de réseau (1) destiné à assurer la sécurité de communications comprenant la discrétion et la confidentialité pour une connexion de communication de bout en bout (3), comprenant:
- une première interface de réseau (6) pour communiquer avec un dispositif d'utilisateur (4);
- une deuxième interface de réseau (7) pour communiquer avec une destination de communication (5);
- une unité d'authentification (8) ou une connexion de communication avec une unité d'authentification (8) disposée dans un réseau de communication (2) pour authentifier (23) au moins un dispositif d'utilisateur (4) et/ou l'utilisateur (9) du dispositif d'utilisateur (4) au dispositif de réseau (1);
- une unité de commande (10) pour établir (24, 25) une première connexion de communication (11) entre la première interface de réseau (6) et le dispositif d'utilisateur (4) et une deuxième connexion de communication (12) entre la deuxième interface de réseau (13) et la destination de communication (5) en réponse à une demande (13) du dispositif d'utilisateur (4) d'établir la communication de bout en bout (3) entre le dispositif d'utilisateur (4) et la destination de communication (5), dans lequel la demande (13) est envoyée à partir du dispositif d'utilisateur (4) au dispositif de réseau (1) sans faire attention aux caractéristiques de sécurité de communications; et
- une unité de cryptage (14) pour crypter (26) et décrypter des données transmises via la première connexion de communication (11) et pour crypter (26) et décrypter des données transmises via la deuxième connexion de communication (12).

2. Dispositif de réseau (1) selon la revendication 1, comprenant en outre une base de données (15) ou une connexion de communication (17) avec une base de données (15) dans un réseau de communication (2), qui attribue des caractéristiques de sécurité de communications à des utilisateurs (9), à des dispositifs d'utilisateur (4), à des types d'utilisateurs et/ou à des types de dispositifs d'utilisateur.

3. Dispositif de réseau (1) selon la revendication 1 ou la revendication 2, comprenant en outre une ou plusieurs interfaces de réseau additionnelles (16) pour communiquer avec des unités (8, 20) ou avec des bases de données (15) disposées dans un réseau de communication (2).

4. Dispositif de réseau (1) selon l'une des revendications 1 à 3, dans lequel le dispositif de réseau (1) fait partie d'un réseau de communication mobile, et il est notamment un nœud B d'un réseau de communication mobile UMTS ou un nœud B évolué d'un réseau de communication mobile LTE.

5. Dispositif de réseau (1) selon l'une des revendications 1 à 4, comprenant en outre une unité d'analyse de données (18) pour analyser (28) des données transmises entre le dispositif d'utilisateur (4) et la destination de communication (5), dans lequel l'unité d'analyse de données (18) fournit de préférence un ou plusieurs des services suivants au dispositif d'utilisateur (4): le suivi du trafic et/ou de l'activité, des analyses des données, l'analyse comportementale, l'équilibrage de charge, la détection d'anomalie, la détection des programmes malveillants, des mandataires d'amélioration de la performance, la publicité avancée, le filtrage des URL, le contrôle parental.

6. Dispositif de réseau (1) selon l'une des revendications 1 à 5, comprenant en outre une unité de traitement de données (19) pour traiter (29) des données transmises entre le dispositif d'utilisateur (4) et la destination de communication (5), dans lequel l'unité de traitement de données (19) fournit de préférence un ou plusieurs des services suivants au dispositif d'utilisateur (4): le convertissement et/ou la compression de vidéos, la compression d'images, la modification des informations d'adresse IP, à savoir la traduction d'adresses de réseau, la mise en cache des contenus.

7. Dispositif de réseau (1) selon l'une des revendications 1 à 6, comprenant en outre une unité de facturation (20) pour saisir et traiter des informations par rapport à la facturation (30) des services au dispositif d'utilisateur (4) et/ou à l'utilisateur (9) du dispositif d'utilisateur (4).

8. Dispositif de réseau (1) selon l'une des revendications 1 à 7, dans lequel la destination de communication (5) est un serveur, un fournisseur de services, un autre dispositif de réseau, un autre dispositif d'utilisateur ou n'importe quel autre type de dispositif approprié comme point d'extrémité de communication.

9. Dispositif de réseau (1) selon l'une des revendications 1 à 8, dans lequel le dispositif d'utilisateur (4) est un dispositif mobile, notamment un téléphone mobile, un smartphone ou une tablette électronique, un ordinateur personnel (PC) ou un dispositif d'ordinateur portable.

10. Procédé pour assurer la sécurité de communications comprenant la discrétion et la confidentialité pour une connexion de communication de bout en bout (3), comprenant les étapes de:
- recevoir (22) à un dispositif de réseau (1) une demande (13) d'un dispositif d'utilisateur (4) d'établir une communication de bout en bout (3) entre le dispositif d'utilisateur (4) et la destination de communication (5), dans lequel la demande (13) est envoyée à partir du dispositif d'utilisateur (4) au dispositif de réseau (1) sans faire attention aux caractéristiques de sécurité de communications;
- authentifier (23) au moins le dispositif d'utilisateur (4) et/ou l'utilisateur (9) du dispositif d'utilisateur (4) au dispositif de réseau (1);
- établir (24) une première connexion de communication (11) entre une première interface de réseau (6) du dispositif de réseau (1) et le dispositif d'utilisateur (4);
- établir (24) une deuxième connexion de communication (12) entre une deuxième interface de réseau (7) du dispositif de réseau (1) et la destination de communication (5);
- crypter (26) des données transmises via la première connexion de communication (11) et crypter (26) des données transmises via la deuxième connexion de communication (12).

11. Procédé selon la revendication 10, comprenant en outre l'étape de demander (27) à une base de données (15), qui attribue des caractéristiques de sécurité de communications à des utilisateurs (9), à des dispositifs d'utilisateur (4), à des types d'utilisateurs et/ou à des types de dispositifs d'utilisateur, des caractéristiques de sécurité attribués à l'utilisateur (9), au dispositif d'utilisateur (4), au type d'utilisateur et/ou au type de dispositif d'utilisateur, qui a été authentifié (23) avant.

12. Procédé selon la revendication 10 ou la revendication 11, comprenant en outre l'étape d'analyser (28) des données transmises entre le dispositif d'utilisateur (4) et la destination de communication (5), dans lequel l'analyse (28) fournit de préférence un ou plusieurs des services suivants au dispositif d'utilisateur (4): le suivi du trafic et/ou de l'activité, des analyses des données, l'analyse comportementale, l'équilibrage de charge, la détection d'anomalie, la détection des programmes malveillants, des mandataires d'amélioration de la performance, la publicité avancée, le filtrage des URL, le contrôle parental.

13. Procédé selon l'une des revendications 10 à 12, comprenant en outre l'étape de traiter (29) des données transmises entre le dispositif d'utilisateur (4) et la destination de communication (5), dans lequel le traitement de données (29) fournit de préférence un ou plusieurs des services suivants au dispositif d'utilisateur (4): le convertissement et/ou la compression de vidéos, la compression d'images, la modification des informations d'adresse IP, à savoir la traduction d'adresses de réseau, la mise en cache des contenus.

14. Procédé selon l'une des revendications 10 à 13, comprenant en outre l'étape de facturer (30) des services au dispositif d'utilisateur (4) et/ou à l'utilisateur (9) du dispositif d'utilisateur (4).
